(19) Europäisches Patentamt / European Patent Office / Office européen des brevets

(11) **EP 1 739 863 B1**

(12) **EUROPEAN PATENT SPECIFICATION**

(45) Date of publication and mention
of the grant of the patent:
**27.02.2008 Bulletin 2008/09**

(51) Int Cl.:
**H04B 10/08** *(2006.01)*    **G01M 11/00** *(2006.01)*

(21) Application number: **06116474.5**

(22) Date of filing: **30.06.2006**

(54) **Method for characterising an optical fibre link**

Verfahren zur Charakterisierung einer optischen Faserverbindung

Procédé permettant de caractériser une liaison à fibre optique

(84) Designated Contracting States:
**BE CH DE FR GB LI NL**

(30) Priority:  **01.07.2005 US 696238 P**
**24.01.2006 EP 06447014**

(43) Date of publication of application:
**03.01.2007 Bulletin 2007/01**

(73) Proprietor: **Faculté Polytechnique de Mons**
**7000 Mons (BE)**

(72) Inventor: **Wuilpart, Marc**
**1420, Braine-L'Alleud (BE)**

(74) Representative: **pronovem**
**Office Van Malderen**
**Avenue Josse Goffin 158**
**1082 Bruxelles (BE)**

(56) References cited:
**WO-A-20/05041449**

• GALTAROSSA A ET AL: "POLARIZATION-SENSITIVE REFLECTOMETRIC TECHNIQUES FOR PMD MEASUREMENTS" 25TH EUROPEAN CONFERENCE ON OPTICAL COMMUNICATION. (ECOC'99). NICE, FRANCE, SEPT. 27 - 30, 1999. REGULAR AND INVITED PAPERS, EUROPEAN CONFERENCE ON OPTICAL COMMUNICATION (ECOC), PARIS : SEE, FR, vol. VOL. II OF II, 26 September 1999 (1999-09-26), pages II-2, XP001035400 ISBN: 2-912328-12-8

• CORSI ET AL: "Beat Length Characterization Based on Backscattering Analysis in Randomly Perturbed Single-Mode Fibers" JOURNAL OF LIGHTWAVE TECHNOLOGY, vol. 17, no. 7, July 1999 (1999-07), pages 1172-1178, XP011029454

• GALTAROSSA A ET AL: "IN-FIELD COMPARISON AMONG POLARIZATION-MODE-DISPERSION MEASUREMENT TECHNIQUES" JOURNAL OF LIGHTWAVE TECHNOLOGY, IEEE SERVICE CENTER, NEW YORK, NY, US, vol. 14, no. 1, January 1996 (1996-01), pages 42-49, XP000585241 ISSN: 0733-8724

• GALTAROSSA A ET AL: "REFLECTOMETRIC MEASUREMENTS OF POLARIZATION PROPERTIES IN OPTICAL-FIBER LINKS" IEEE TRANSACTIONS ON INSTRUMENTATION AND MEASUREMENT, IEEE SERVICE CENTER, PISCATAWAY, NJ, US, vol. 53, no. 1, February 2004 (2004-02), pages 86-94, XP001198375 ISSN: 0018-9456

• GALTAROSSA ET AL: "Measurement of Local Beat Length and Differential Group Delay in Installed Single-Mode Fibers" JOURNAL OF LIGHTWAVE TECHNOLOGY, vol. 18, no. 10, October 2000 (2000-10), pages 1389-1394, XP011029792

• WUILPART M ET AL: "PMD MEASUREMENT WITH A POLARIZATION-OTDR" ECOC 2002. 28TH. EUROPEAN CONFERENCE ON OPTICAL COMMUNICATION. COPENHAGEN, DENMARK, SEPT. 8 - 12, 2002, EUROPEAN CONFERENCE ON OPTICAL COMMUNICATION.(ECOC), vol. VOL. 4 OF 4. CONF. 28, 12 September 2002 (2002-09-12), page 933, XP001158413

• HUTTNER B ET AL: "DISTRIBUTED PMD MEASUREMENT WITH A POLARIZATION-OTDR IN OPTICAL FIBERS" JOURNAL OF LIGHTWAVE TECHNOLOGY, IEEE SERVICE CENTER, NEW YORK, NY, US, vol. 17, no. 10, October 1999 (1999-10), pages 1843-1848, XP001033243 ISSN: 0733-8724

EP 1 739 863 B1

**Description**

**Field of the invention**

The present invention relates to a method for characterising an optical fibre link by analysis of a Rayleigh backscatter signal.

**State of the art**

The use of dispersion-shifted and dispersion compensating fibres has minimised the effect of chromatic dispersion on the bandwidth of an optical link. Polarisation mode dispersion (PMD) has therefore become the most serious limiting factor in high-speed optical communication systems. There exist several measurement techniques of PMD, but they only allow for measuring the global value and do not give information about the distribution of PMD along the fibre length. Measuring the spatial distribution of PMD is, however, important. Such a measurement would indeed allow locating the bad trunks in an optical link causing high PMD value. This can be essential information in the frame of a network maintenance and upgrade.

The PMD of a fibre depends on two parameters: the beat length ($L_B$) and the coupling length ($L_C$). The beat length depends on the birefringence of the fibre and the coupling length is related to the phenomenon of polarisation mode coupling. Measuring the spatial distribution of PMD therefore consists of measuring the distribution of both the beat and coupling lengths.

Most of the techniques proposed for measurement of the distributed PMD are based on polarisation-optical time domain reflectometry (POTDR). The concept of POTDR was introduced by A. Rogers in the 80's (see A. Rogers, 'Polarization-optical time domain reflectometry: a technique for the measurement of field distributions', Applied Optics, vol. 20, pp. 1060-1074, 1981). It basically consists of measuring the polarisation properties of the Rayleigh backscatter signal when an optical pulse propagates down the fibre. Some POTDR-based techniques for PMD characterisation have been developed since. In 'Beat Length Characterisation based on Backscattering Analysis in Randomly Perturbed Single-Mode Fibres' (Corsi et al, J.of Lightwave Technol., vol.17, pp.1172-1178, 1999) Corsi presents a technique allowing a measurement of the beat length distribution along an optical link, which therefore does not allow the complete determination of the PMD. The technique proposed by Corsi uses the level crossing rate technique applied to the whole backscattering signal. Sunnerud presented a POTDR-based set-up enabling the measurement of the accumulation of PMD along the fibre (see H. Sunnerud et al., 'Polarization-Mode Dispersion measurements along installed optical fibers using gated backscattered light and a polarimeter', J. of Lightwave Technol., vol. 18, pp. 897-904, 2000). This method requires POTDR measurements at several wavelengths.

A technique based on the measurement of the degree of polarisation by using a POTDR set-up has also been presented in 'Distributed detection of high-PMD sections on installed fibers using a polarization-OTDR', M. Leblanc, Proc. OFMC'01, pp. 155-162, 2001, and is related to the patent application US 2003/0174312. This technique does not allow quantification of the PMD, but enables to obtain distributed information about the level of PMD. Moreover this technique requires the complete measurement of the state of polarisation of the backscattered signal. More recently, Galtarossa described another technique for the PMD measurement for which the coupling length is determined from the correlation of the birefringence vector (see 'Measurement of birefringence correlation length in long, single-mode fibers', Galtarossa et al., Opt. Lett., vol. 26, pp. 962-964, 2001), which also requires the measurement of the polarisation states of the backscattered signal. Moreover, this technique requires a quite short duration of the pulses launched in the optical fibre: 5-10 ns.

In "Polarizaflon-sensitive reflectometric techniques for PMD measurements", by Galtarossa et al., ECOC'99, the authors disclose a method for characterising an optical fibre link by estimating the coupling length, the beat length and the PMD distribution of the link, where the coupling length can be determined based on the mean-level crossing points (LCR) of the backscattered signal.

In "Reflectometric measurements of polarization properties in optical-flber links", by Galtarossa et al., IEEE Transactions on Instrumentation and Measurement, viol.53, no.1, Feb.2004, the evolution of the beat length along a fibre is determined by applying the LCR method separately to each of the sections of the fibre.

In 'Polarization mode dispersion mapping in optical fibers with a Polarization-OTDR', M. Wuilpart, G. Ravet, P. Mégret and M. Blondel, Photon. Technol. Lett., vol. 14, pp. 1716-1718, 2002, the authors describe an analysis of the POTDR signal which allows a mapping of the PMD along an optical fibre link by quantifying the PMD on each fibre of the link. The main advantage of that technique is that it does not require the complete measurement of the backscattered polarisation state evolution and only uses a linear polariser at the fibre input, which is quite simple to implement. The determination of the beat length, the coupling length and finally the PMD is based on the analysis of the statistical properties of the extrema present in a POTDR trace.

In said paper by Wuilpart et al. the spatial distribution of the linear birefringence $\delta$ is characterised by a Rayleigh statistical distribution along the fibre length and it is assumed that the rate of change of the birefringence angle q is described by a Gaussian distribution with zero mean and standard deviation σ depending on the polarisation mode coupling strength. The circular birefringence is neglected. A relationship between the coupling length $L_C$ and σ can be derived and one can obtain:

$$L_C = \frac{0.879}{\sigma^2}$$

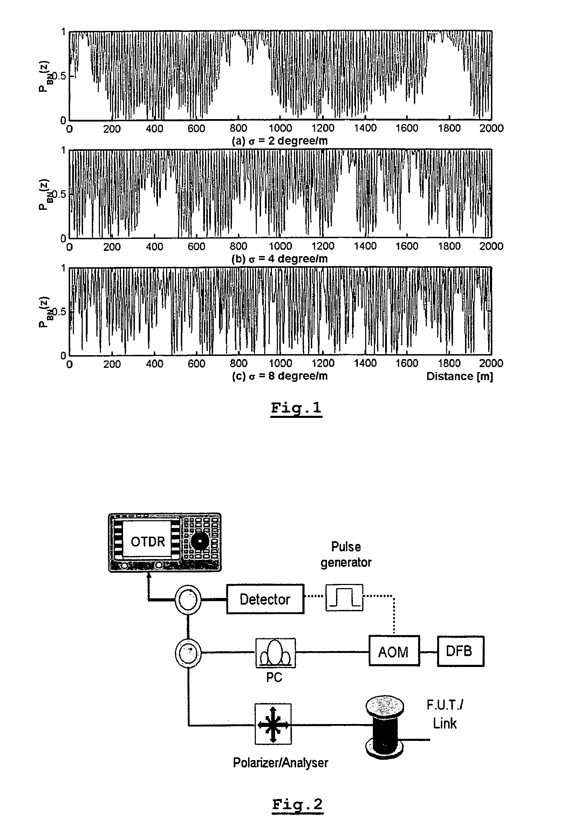

Fig. 1 shows different POTDR traces $P_{Bn}(z)$ obtained by simulation for an infinitely small pulse duration, for a beat length of 25 m and for different values of σ: 2, 4 and 8 degrees/m, respectively. One can observe that the lower envelope of the curves varies in a smoother way when σ decreases and therefore when $L_C$ increases. In the prior art a statistical approach is used for determining (an approximate value of) the coupling length from the POTDR trace. The polarisation mode dispersion (PMD) can (approximately) be derived from the previously determined approximations of beat length and coupling length.

Patent document WO 2005/041449-A1 proposes a method for determining in a more accurate way the spatial distribution of the beat length, the coupling length and the polarisation mode dispersion. The method further allows taking into account imperfections of the experimental set-up. The disclosed method comprises an iterative determination of a beat length interval and an interval for the polarisation mode coupling. When the length of the intervals drops below a predetermined value, accurate values for the beat length and the coupling length are obtained, from which in a subsequent step the PMD can be calculated.

Although the approach presented in WO 2005/041449-A1 provides more accuracy, it is found that the method performs best for relatively short optical links (e.g. in a range of 20 km). This is due to the short optical pulses (typical duration in the order of 10 ns) used for performing the method. The short pulses significantly limit the maximum measurable length. The curves described in document WO 2005/041449-A1 at Fig.6 indeed present a slope which decreases when the pulse length increases. Consequently, using long pulses significantly decreases the accuracy of the measured beat length. There is thus certainly a need for a method wherein longer pulses (>100 ns) can be used, as such an approach would allow to map the PMD along long optical fibre links (of e.g. about 100 km).

## Aims of the invention

The present invention aims to provide a method for determining the beat length, the coupling length and the PMD along an optical fibre link wherein pulses of any duration (but preferably longer than 100 ns) can be used.

## Summary of the invention

The present invention relates to a method for characterising an optical fibre link by its beat length, coupling length and polarisation mode dispersion distribution, comprising the steps of :

- sending a pulsed signal along the optical fibre link and measuring the backscattered signal, after passing through a polariser,
- deriving the mean value of the backscattered signal and the number of times the backscattered signal crosses the mean value,
- determining an estimation of the coupling length, taking into account the length of the optical fibre link and the number of times said backscattered signal crosses said mean value,
- dividing the backscattered signal in a plurality of non-overlapping sections, said plurality of sections constituting said backscattered signal, deriving for each section the section mean value and the number of times $N_i$ said section mean value is crossed in the section and calculating the sum of the $N_i$ of the various sections of the plurality of sections,
- determining an estimation of the beat length from the information derived in the previous step and from the estimated coupling length,
- calculating the polarisation mode dispersion from said beat length estimation and said estimated coupling length.

In a preferred embodiment the backscattered signal is a POTDR signal. In an advantageous embodiment the pulsed signal has a duration longer than 100 ns. The polariser is preferably a linear polariser.

The various sections advantageously are of equal length.

Optionally the method comprises a further step of deriving the length of said optical fibre.

In a further aspect the invention relates to a method for characterising an optical link consisting of a concatenation of several fibres, wherein the method as previously described is applied to each fibre.

In a specific aspect the invention relates to the use of method as described to locate the position of polarisation mode dispersion sources within an optical fibre link. The method according to the invention can advantageously be used in telecommunication networks or in fibre sensing applications.

## Short description of the drawings

Fig. 1 represents simulated POTDR traces for a given beat length and different values of $\sigma$.

Fig. 2 represents the set-up for measuring a POTDR trace.

Fig. 3 represents a POTDR trace for a concatenation of 3 fibres.

Fig. 4 represents a curve in thin line describing the POTDR trace obtained for an infinitely small pulse duration and the thick curve corresponding to the POTDR trace obtained with 500ns pulses.

Fig. 5 represents the evolution of $L_C$ with $L/N_m$ for different values of the beat length $L_B$.

Fig. 6 represents the evolution of $L_B$ with $L/N_{md}$ for different values of $L_C$ and for $\Delta 1 = 25$m.

## Detailed description of the invention

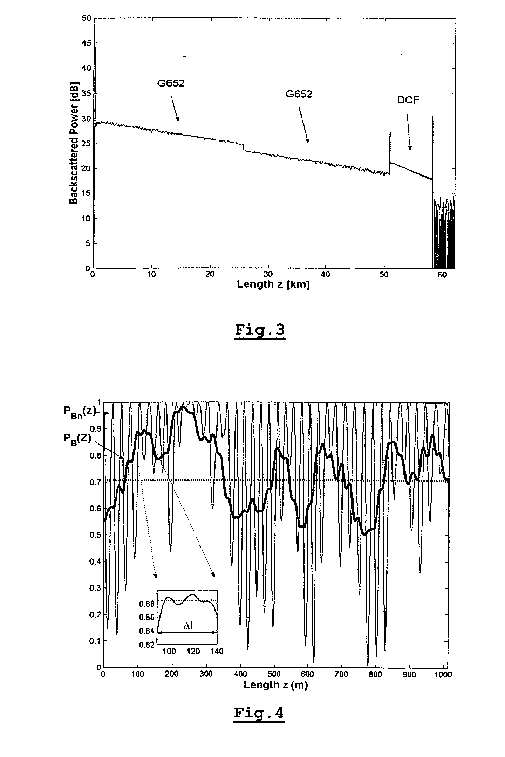

The measurement set-up is shown in Fig.2 and is similar to the one presented in WO2005/041449. A commercially available OTDR is used for the transmission and the synchronisation of the optical pulses and for the detection of the backscattered power. The OTDR optical pulses (preferably >100ns) are detected and the resulting electrical signal is used to externally modulate a DFB laser via a pulse generator and an acousto-optic modulator (AOM). A polariser is placed at the fibre input to fix the input state of polarisation and to analyse the backscattered signal. A polarisation controller (PC) is placed after the AOM to maximise the optical power at the fibre input. The coherence noise due to the high coherence of the source is reduced by varying the wavelength on a range of 1 nm during the measurement of a POTDR trace. Fig.3 shows an example of a typical POTDR trace (concatenation of 3 fibres).

As already mentioned, POTDR traces obtained with such a technique (and for an infinitely short pulse duration) show that the variation of the lower envelope gives information about the fibre coupling length: the lower envelope varies in a smoother way when $L_C$ increases (see Fig.1). The high-frequency oscillation in the POTDR trace is related to the birefringence and provides information about the fibre beat length.

When the simulations take into account the pulse duration of the measurement system, the resulting POTDR trace $P_B(z)$ corresponds to a sweeping average of the ideal trace $P_{Bn}(z)$ over a small length of fibre related to the pulse duration (50m in the case of 500ns pulses). Consequently, when the pulse duration increases, $P_B(z)$ becomes smoother and smoother. Fig. 4 shows $P_{Bn}(z)$ and $P_B(z)$ for $L_B$=50m, $L_C$=500m and a pulse duration of 500ns. One can clearly observe that the $P_B(z)$ is an average of $P_{Bn}(z)$ over a small length of fibre and that its main frequency evolution is related to the evolution of the lower envelope of the ideal POTDR trace $P_{Bn}(z)$. This can be explained by the averaging process, which alleviates the effect of the local birefringence: it is the polarisation mode coupling that mainly contributes to the POTDR signal shape.

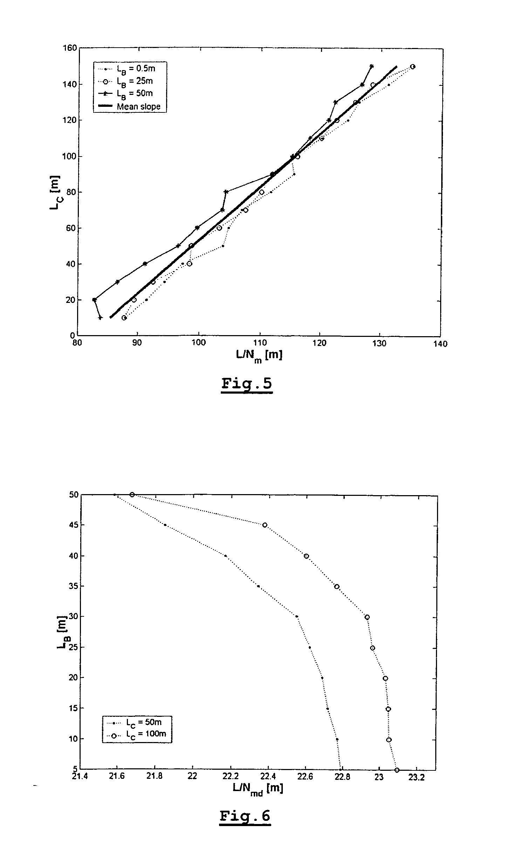

The frequency evolution of $P_B(z)$ may be described by $N_m$, the number of times $P_B(z)$ crosses its mean value (dashed line in Fig.4). Fig.5 shows the evolution of $L_C$ with $L/N_m$ (L being the fibre length) for different values of the beat length $L_B$. One can clearly observe that $L/N_m$ strongly depends on the coupling length while it slightly depends on $L_B$. In practice, $N_m$ can be easily measured and, supposing that 0.5<$L_B$<50m, the fibre coupling length can then be estimated using the mean curve (thick slope in Fig. 5). Note that Fig. 5 has been obtained by simulations taking into account the characteristics of the measurement set-up, i.e. the rise time of the modulator, the time jitter introduced by the electronic equipment and the data sampling rate.

When zooming in on the POTDR trace $P_B(z)$ over a small fibre length $\Delta l$ as described in the inset of Fig.4, one can notice that a residual oscillating signal is still present after the averaging process. This oscillating signal contains information about the birefringence and the beat length of the fibre. The frequency evolution of $P_B(z)$ within $\Delta l$ may be described by the number of times $P_B(z)$ crosses its mean value (dashed line in the inset of figure 4). In practice, the POTDR trace is divided in (preferably equal) non-overlapping sections of length $\Delta l_i$ (such that all sections together again constitute the backscattered signal) and a new parameter $N_{md}$ is calculated by

$$N_{md} = \Sigma_{i=1}^{n} N_i \qquad \text{(eq.3)}$$

where $n$ is the number of sections and $N_i$ is the number of time $P_B(z)$ crosses its mean value within the $i$th section of the trace. The evolution of $L_B$ with $L/N_{md}$ for different values of $L_C$ and for $\Delta l$ =25m is shown in Fig.6. One can clearly observe that $L/N_{md}$ gives information about $L_B$. In practice, $N_{md}$ can be easily measured and the beat length can then be determined using the curve of Fig.6 corresponding to the coupling length previously determined.

From the measurement of the beat length and the coupling length, it is easy to determine the PMD value by :

$$PMD^2 = \frac{1}{2}\left(\frac{\lambda}{cL_B}\right)^2 L_C^2\left(\frac{2L}{L_C} - 1 + e^{-\frac{2L}{L_C}}\right)$$

where $c$ denotes the light velocity in a vacuum, $\lambda$ the measurement wavelength and $L$ the fibre length. This process can be repeated for each contribution in the POTDR signal corresponding to the different fibres of the optical link: it is therefore possible to map the PMD along this link. As mentioned in the state of art, in 'Beat Length Characterisation based on Backscattering Analysis in Randomly Perturbed Single-Mode Fibres' (Corsi et al, J.of Lightwave Technol ., vol.17, pp. 1172-1178, 1999) Corsi also presented a level-crossing rate technique. However the technique is applied to the whole backscattering signal obtained with a short pulse duration which makes only possible the measurement of the beat length. In the present invention, the level crossing rate technique is used to the whole backscattering signal for measuring the coupling length thanks to the use of a long pulse duration and the measurement of the beat length is performed by the level crossing rate technique applied to non overlapping sections of length $\Delta l$ of the backscattered signal.

The technique according to the present invention allows for PMD mapping in long optical fibre links. The technique is based on a single-wavelength Polarisation-OTDR set-up using a linear polariser at the fibre input and is quite simple to implement. The applied algorithm is based on a level-crossing rate analysis of the POTDR trace, which enables the distributed measurement of the beat length, the coupling length and the PMD. The algorithm allows using large pulses (>100ns), which significantly improves the measurement dynamic. Moreover, this technique does not require the complete measurement of the backscattered polarisation state.

**Claims**

1. Method for characterising an optical fibre link by its beat length, coupling length and polarisation mode dispersion distribution, comprising the steps of

   - sending a pulsed signal along said optical fibre link and measuring the backscattered signal, after passing through a polariser,
   - deriving the mean value of said backscattered signal and the number of times said backscattered signal crosses said mean value,
   - determining an estimation of said coupling length, taking into account the length of said optical fibre link and said number of times said backscattered signal crosses said mean value,
   - dividing said backscattered signal in a plurality of non-overlapping sections, said plurality of sections constituting said backscattered signal, deriving for each section the section mean value and the number of times $N_i$ said section mean value is crossed in said section and calculating the sum of the $N_i$ of the various sections of said plurality of sections,
   - determining an estimation of said beat length from the information derived in the previous step and from said estimated coupling length,
   - calculating the polarisation mode dispersion from said beat length estimation and said estimated coupling length.

2. The method as in claim 1, wherein said backscattered signal is a POTDR signal.

3. The method as in claim 1 or 2, wherein said pulsed signal has a duration longer than 100 ns.

4. The method as in any claims 1 to 3, wherein said polariser is a linear polariser.

5. The method as in any of claims 1 to 4, wherein said sections are of equal length.

6. The method as in any of claims 1 to 5, comprising a further step of deriving the length of said optical fibre.

7. Method for characterising an optical link consisting of a concatenation of several fibres, by applying the method as in any of the previous claims to each fibre.

8. Use of method as in any of the previous claims to locate the position of polarisation mode dispersion sources within an optical fibre link.

9. Use of method as in any of the claims 1 to 8 in telecommunication networks.

10. Use of method as in any of the claims 1 to 8 in fibre sensing applications.

**Patentansprüche**

1. Verfahren zum Kennzeichnen einer Glasfaserverbindung durch ihre Taktlänge, Koppellänge und Polarisationsmodus-Dispersionsverteilung, umfassend die folgenden Schritte

   - Senden eines gepulsten Signals entlang der Glasfaserverbindung und Messen des rückgestreuten Signals nach Durchlaufen eines Polarisators,
   - Ableiten des Mittelwertes des rückgestreuten Signals und die Häufigkeit, in der das rückgestreute Signal den Mittelwert überschreitet,
   - Bestimmen einer Schätzung der Koppellänge unter Berücksichtigung der Länge des besagten Glasfaserverbindung und der Häufigkeit, in der das rückgestreute Signal den Mittelwert überschreitet,
   - Aufteilen des rückgestreuten Signals in mehrere nicht überlappende Abschnitte, wobei die besagten mehreren Abschnitte das rückgestreute Signal bilden, wobei für jeden Abschnitt der Abschnittmittelwert und die Häufigkeit $N_i$, in der die der Abschnittsmittelwert in dem Abschnitt überschritten wird, abgeleitet wird und die Summe der $N_i$ der verschiedenen Abschnitte der mehreren Abschnitte berechnet wird,
   - Bestimmen einer Schätzung der Taktlänge ausgehend von Angaben, die aus dem vorherigen Schritt abgeleitet worden sind, und von der geschätzten Koppellänge,
   - Berechnen der Polarisationsmodusdispersion aus der Taktlängenschätzung und der geschätzten Koppellänge.

2. Verfahren nach Anspruch 1, wobei das rückgestreute Signal ein POTDR-Signal ist.

3. Verfahren nach Anspruch 1 oder 2, wobei das gepulste Signal eine Dauer länger als 100 ns aufweist.

4. Verfahren nach einem der Ansprüche 1 bis 3, wobei der Polarisator ein linearer Polarisator ist.

5. Verfahren nach einem der Ansprüche 1 bis 4, wobei die Abschnitte gleicher Länge sind.

6. Verfahren nach einem der Ansprüche 1 bis 5, umfassend einen weiteren Schritt des Ableitens der Länge der Glasfaser.

7. Verfahren zum Kennzeichnen einer optischen Verbindung, die aus einer Verknüpfung mehrerer Fasern besteht, durch Anwenden des Verfahrens nach einem der vorhergehenden Ansprüche auf jede Faser.

8. Verwendung des Verfahrens nach einem der vorhergehenden Ansprüche, um die Position der Polarisationsmodus-Dispersionsquellen innerhalb einer Glasfaserverbindung zu ermitteln.

9. Verwendung des Verfahrens nach einem der Ansprüche 1 bis 8 in Telekommunikationsnetzen.

10. Verwendung des Verfahrens nach einem der Ansprüche 1 bis 8 in Faserabtastanwendungen.

**Revendications**

1. Procédé pour caractériser une liaison par fibre optique par sa longueur de battement, longueur de couplage et distribution de dispersion de mode de polarisation, comprenant les étapes consistant à :

   - envoyer un signal pulsé le long de ladite liaison par fibre optique et mesurer le signal rétrodiffusé, après passage à travers un polariseur,
   - déduire la valeur moyenne dudit signal rétrodiffusé et le nombre de fois où ledit signal rétrodiffusé passe par ladite valeur moyenne,

- estimer ladite longueur de couplage, en prenant en compte la longueur de ladite liaison par fibre optique et ledit nombre de fois où ledit signal rétrodiffusé passe par ladite valeur moyenne,
- diviser ledit signal rétrodiffusé en une pluralité de sections non chevauchantes, ladite pluralité de sections constituant ledit signal rétrodiffusé, en déduisant pour chaque section la valeur moyenne de section et le nombre de fois $N_i$ où ladite valeur moyenne de section est rencontrée dans ladite section et en calculant la somme des $N_i$ des diverses sections de ladite pluralité de sections,
- estimer ladite longueur de battement à partir des informations déduites dans l'étape précédente et à partir de ladite longueur de couplage estimée,
- calculer la dispersion de mode de polarisation à partir de ladite estimation de longueur de battement et ladite longueur de couplage estimée.

2. Procédé selon la revendication 1, dans lequel ledit signal rétrodiffusé est un signal POTDR.

3. Procédé selon la revendication 1 ou 2, dans lequel ledit signal pulsé a une durée plus longue que 100 ns.

4. Procédé selon l'une quelconque des revendications 1 à 3, dans lequel ledit polariseur est un polariseur linéaire.

5. Procédé selon l'une quelconque des revendications 1 à 4, dans lequel lesdites sections sont de longueur égale.

6. Procédé selon l'une quelconque des revendications 1 à 5, comprenant une étape supplémentaire consistant à déduire la longueur de ladite fibre optique.

7. Procédé pour caractériser une liaison optique consistant en une concaténation de plusieurs fibres, par application du procédé selon l'une quelconque des revendications précédentes à chaque fibre.

8. Utilisation du procédé selon l'une quelconque des revendications précédentes, pour localiser la position des sources de dispersion de mode de polarisation au sein d'une liaison par fibre optique.

9. Utilisation d'un procédé selon l'une quelconque des revendications 1 à 8, dans des réseaux de télécommunication.

10. Utilisation d'un procédé selon l'une quelconque des revendications 1 à 8, dans des applications de détection par fibre.

(a) σ = 2 degree/m

(b) σ = 4 degree/m

(c) σ = 8 degree/m    Distance [m]

Fig.1

Fig.2

**Fig.3**

**Fig.4**

Fig.5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030174312 A
- WO 2005041449 A1
- WO 2005041449 A

### Non-patent literature cited in the description

- **A. ROGERS.** Polarization-optical time domain reflectometry: a technique for the measurement of field distributions. *Applied Optics,* 1981, vol. 20, 1060-1074
- **CORSI et al.** *J.of Lightwave Technol.,* 1999, vol. 17, 1172-1178
- **H. SUNNERUD et al.** Polarization-Mode Dispersion measurements along installed optical fibers using gated backscattered light and a polarimeter. *J. of Lightwave Technol.,* 2000, vol. 18, 897-904
- **M. LEBLANC.** Distributed detection of high-PMD sections on installed fibers using a polarization-OTDR. *Proc. OFMC'01,* 2001, 155-162
- **GALTAROSSA et al.** Measurement of birefringence correlation length in long, single-mode fibers. *Opt. Lett.,* 2001, vol. 26, 962-964
- **GALTAROSSA et al.** Reflectometric measurements of polarization properties in optical-flber links. *IEEE Transactions on Instrumentation and Measurement,* February 2004, vol. 53 (1
- **M. WUILPART ; G. RAVET ; P. MÉGRET ; M. BLONDEL.** Polarization mode dispersion mapping in optical fibers with a Polarization-OTDR. *Photon. Technol. Lett.,* 2002, vol. 14, 1716-1718
- **CORSI et al.** *J.of Lightwave Technol .,* 1999, vol. 17, 1172-1178